# EUROPEAN PATENT SPECIFICATION

(11) **EP 3 241 758 B1**
(45) Date of publication and mention of the grant of the patent: **06.05.2020**
(21) Application number: 15875205.5
(22) Date of filing: 29.12.2015
(51) Int. Cl.: B64C 39/02

(54) **FULLY-PROTECTED UNMANNED AERIAL VEHICLE**
VOLLSTÄNDIG GESCHÜTZTES UNBEMANNTES LUFTFAHRZEUG
VÉHICULE AÉRIEN SANS PILOTE ENTIÈREMENT PROTÉGÉ

(30) Priority: 04.01.2015 US 201562099512 P; 31.08.2015 CN 201510547151
(43) Date of publication of application: 08.11.2017
(73) Proprietor: Beijing Zero Zero Infinity Technology Co. Ltd., Beijing 100088 (CN)
(72) Inventor: ZHANG, Tong, Beijing 100088 (CN); WANG, Mengqiu, Beijing 100088 (CN); WANG, Zhaozhe, Beijing 100088 (CN); ZHANG, Xuyang, Beijing 100088 (CN); ZHANG, Guanqun, Beijing 100088 (CN); GONG, Shuang, Beijing 100088 (CN); ZHANG, Yalin, Beijing 100088 (CN); WANG, Jinglong, Beijing 100088 (CN); LIU, Lixin, Beijing 100088 (CN)
(74) Representative: Carvajal y Urquijo, Isabel
(86) International application number: PCT/CN2015/099339
(87) International publication number: WO 2016/107529

(56) References cited:
- WO-A1-2006/112578
- WO-A1-2006/112578
- WO-A2-2009/054937
- WO-A2-2014/080386
- CH-A- 333 967
- CN-U- 202 828 091
- CN-U- 203 544 368
- KR-A- 20120 136 797
- US-A- 4 043 421
- US-A- 5 672 086
- US-A1- 2003 192 989
- US-A1- 2012 158 215
- US-A1- 2013 134 254

## Description

This application claims the benefit of priorities to US Patent Application No. 62/099512 titled "FOLDABLE DRONE WITH FULLY PROTECTED PROPELLER GUARD SYSTEM", filed with the United States Patent and Trademark Office on January 4, 2015, and Chinese Patent Application No. 201510547151.3 titled "FULLY PROTECTED DRONE", filed with the Chinese State Intellectual Property Office on August 31, 2015.

### FIELD

The present application relates to the technical field of drones and particularly to a fully protected drone.

### BACKGROUND

An unmanned aircraft, abbreviated as a drone, is an unmanned air vehicle controlled either by a program control device thereof or by a wireless remote. The drone was first developed in 1940's, and was used as a target drone in military training at that time. The drone has a wide application, a low cost, and a high cost effectiveness, and the drone will not cause human injuries, has a strong viability and a great maneuvering performance, and is easy to use. Thus, the drone not only plays an extremely important role in modern warfare, but also has a broader prospect in civilian fields. At present, drones have been widely applied to fields such as guard, urban management, agriculture, geology, meteorology, power, emergency rescue and disaster relief, video capture and the like.

Some prior art reference documents disclose the technologies relating to the unmanned aircraft: document US2013/134254A1 relates to an unmanned aerial vehicle designed to extinguish fires from the air while remaining tethered to the ground via a tether system fashioned to provide the UAV with power and extinguishant. Document US5672086A relates to a toy aircraft that includes a main body portion having a central hub member and a plurality of wings. Document WO2009/054937A2 relates to an unmanned flying helicopter aircraft platform that uses counter rotating helicopter rotor blades that turn in opposite directions and that are located one within a sufficient distance above the other one to provide propulsion. Document WO2006/112578A1 relates to a vertical take-off and landing aircraft. Document US2012/158215A1 relates to a programmable surface comprising an array of cells, in which each cell has a propeller. Document CH333967A relates to a flight toy. Document US4046421A relates to an air car capable of flying above the surface of the ground and above the ground-effect distance.

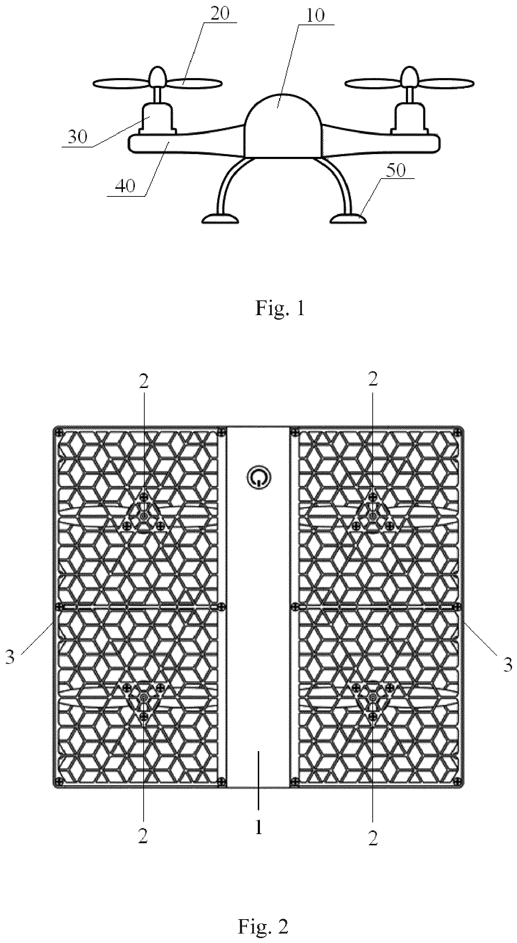

Reference is made to Figure 1, which is a schematic view showing the structure of a typical drone in the conventional technology.

As shown in Figure 1, the drone in the conventional technology mainly includes five parts, including a body 10, rotary wings 20, motors 30, connecting rods 40 and a landing gear 50. The body 10 is generally configured to have a hemispheric shape. Several connecting rods 40 are mounted at intervals in a circumferential direction of the body 10, and each of the connecting rods 40 extends outwards in a radial direction of the body 10. Each of the rotary wings 20 is connected to the respective motor 30 through a rotary wing shaft on the rotary wing 20, to form one structural body. The structural bodies formed by the rotary wings 20 and the motors 30 are respectively mounted on outer ends of the connecting rods 40, to connect the rotary wings 20 and the motors 30 to the body 10. Also, the landing gear 50 is connected to the body 10, thus the entire drone can be supported by the landing gear 50, and flying and retrieval of the drone can be achieved by the landing gear 50.

However, as shown in Figure 1, the above conventional drone has the following technical issues.

When the conventional drone is flying stably, the rotating speed of the rotary wing 20 is equal to or greater than 10000rpm. Therefore, whether in a professional application field of the drone or for amateurs, accidents of injuries caused by the rotary wing 20 of the drone happen occasionally. That is to say, the drone in the conventional technology has a low security.

Furthermore, as shown in Figure 1, in the above conventional drone, the rotary wings 20, the motors 30, the body 10 and the landing gear 50 are located in three planes at different levels, thus the height of the drone is increased to a large extent, which is not convenient to carry the drone.

Therefore, an urgent technical issue to be addressed by the person skilled in the art is to design a fully protected drone, to improve the operation security of the drone and to assist in improving the portability of the drone.

### SUMMARY

An object of the present application is to provide a fully protected drone, to improve the operation security and portability of the drone.

In order to address the above technical issues, a fully protected drone is provided according to claim 1 of the present application, which includes a drone body and a rotary wing connected to the drone body, and further includes a protection housing connected to the drone body, the protection housing is a meshed closed housing and has a hollow cavity, and the rotary wing is mounted in the hollow cavity.

The fully protected drone according to the invention has a protection housing, the rotary wing is mounted in the hollow cavity of the protection housing, and thus the rotary wing will not contact the human body of an operator, thus the operator can fly and retrieve the drone by hand, and a landing gear in the conventional technology is omitted, which improves the operation convenience of the rotary wing. Furthermore, since the rotary wing will not contact the human body, the operation security is improved to a large extent. Moreover, the protection housing is configured as a meshed closed housing, and the meshed structure provides a space for the rotary wing to generate lift force, thereby ensuring the normal flight of the drone. With the closed housing, a sharp tip can be avoided, which further improves the operation security and prevents the housing from causing injuries to the human body. Compared with the conventional technology in which a rotary wing is fixed above the drone body through a connecting rod, the rotary wing according to the present application is mounted in the protection housing connected to the drone body, and the connecting rod is omitted, thereby not only simplifying the structure of the drone, but also reducing the overall height of the drone and improving the portability of the drone.

Furthermore, according to the invention, the protection housing includes a top plate, a bottom plate and a middle frame, the middle frame is configured to have a U shape, when being viewed from the top, and is connected to the drone body through an open end of the U shape; and the top plate and the bottom plate are respectively mounted on a top surface and a bottom surface of the middle frame, to enclose the middle frame to form the hollow cavity.

Optionally, several mounting portions for mounting the rotary wing are provided on the top plate.

Optionally, the mounting portions are arranged at intervals from one side to another side of the middle frame.

Optionally, the middle frame is detachably connected to the drone body; and the top plate and/or the bottom plate is detachably connected to the middle frame.

Optionally, the top plate and/or the bottom plate includes a plurality of first sub-plates spliced together; and the middle frame includes two side plates and an end plate connected between tail ends of the two side plates, and the side plate and/or each of the end plates includes a plurality of second sub-plates spliced together.

Optionally, the rotary wing includes a rotary wing body and a wing portion extending out from the rotary wing body, the rotary wing body is in the form of a hollow housing, and a motor is nested in the hollow housing.

Optionally, the protection housing has a non-hollow rate ranging from 10% to 20%.

Optionally, the meshed structure of the protection housing is in the form of a regular hexagon, and a radius of a circumscribed circle of the regular hexagon ranges from 6mm to 8mm.

Optionally, the protection housings are symmetrically arranged at two sides of the drone body, top surfaces of the protection housings at the two sides are joined with a top surface of the drone body to be flush with the top surface of the drone body, and bottom surfaces of the protection housings at the two sides are joined with a bottom surface of the drone body to be flush with the bottom surface of the drone body, to form a cuboid drone.

### BRIEF DESCRIPTION OF THE DRAWINGS

Figure 1 is a schematic view showing the structure of a typical drone in the conventional technology;
Figure 2 is a top view of a fully protected drone according to an embodiment of the present application;
Figure 3 is a bottom view of a fully protected drone according to an embodiment of the present application;
Figure 4 is an exploded perspective view showing the assembling of a fully protected drone according to an embodiment of the present application;
Figure 5 is a top view showing an arrangement of a protection housing of the fully protected drone in the present application; and
Figure 6 is an exploded perspective view showing the assembling of a rotary wing and a motor in the fully protected drone according to an embodiment of the present application.

**Reference numerals in Figure 1:**

| | | | |
|---|---|---|---|
| 10 | body, | 20 | rotary wing, |
| 30 | motor, | 40 | connecting rod, |
| 50 | landing gear, and | | |

**Reference numerals in Figures 2 to 6:**

| | | | |
|---|---|---|---|
| 1 | drone body, | 2 | rotary wing, |
| 21 | rotary wing body, | 22 | wing portion, |
| 3 | protection housing, | 31 | hollow cavity, |
| 32 | top plate, | 321 | mounting portion, |
| 33 | bottom plate, | 34 | middle frame, |
| 341 | side plate, | 342 | end plate, and |
| 4 | motor. | | |

### DETAILED DESCRIPTION

A core of the present application is to provide a fully protected drone, to improve the operation security and the portability of the drone.

It should be noted that, terms such as "first", "second" and the like in the present application are only intended to distinguish multiple components or structures having the same or similar structures from each other, rather than define particular arrangement order or connection relationship.

In the present application, the directions "up", "down", "left" and "right" are defined with reference to a drone body 1. The direction in which the drone faces the ground in a using state is defined as "down", and the direction opposite to "down" is defined as "up"; and the direction in which the drone body 1 extends is defined as the "front and rear direction", and in a plane parallel to the drone body 1, the direction perpendicular to the front and rear direction is the "left and right direction".

A drone according to the present application is described in detail hereinafter in conjunction with drawings, to help those skilled in the art to accurately understand the technical solutions of the present application.

As shown in Figures 2 to 4, a fully protected drone (abbreviated as drone hereinafter) is provided according to the present application, and includes a drone body 1, and a protection housing 3 and a rotary wing 2 which are connected to the drone body 1. The protection housing 3 is a meshed closed housing and has a hollow cavity 31. The rotary wing 2 is mounted in the hollow cavity 31 of the protection housing 3. The drone body 1 may be configured to have a hollow box-like shape, and a control element may be installed in the drone body 1 to control the drone. As shown in Figure 2, a switch may be arranged on the drone body 1 and may be electrically connected to the control element, to start and stop the drone via the switch. The protection housing 3 may be configured to have a meshed structure in any forms capable of being connected to the drone body 1. The meshed structure has various forms, may be of a regular or irregular geometrical shape, and may also in the form of other patterns and the like. The form of the meshed structure is not limited, as long as it can ensure that the drone has a certain hollow rate.

With the above structure, the rotary wing 2 is internally mounted in the protection housing 3, an operator will not directly contact the rotary wing 2, and can fly and retrieve the drone by hand, and thus a landing gear in the conventional technology is omitted, which improves the operation convenience. During the operation, the operator does not contact the rotary wing 2, which avoids the human body from being injured by the rotary wing 2 spinning at a high speed, thereby improving the operation security. The protection housing 3 is configured to have a meshed structure, and the hollow area provides an adequate space for the rotary wing 2 to generate a lift force, while meeting the requirement for griping, thereby ensuring the normal flight of the drone. The protection housing 3 is configured to have a closed housing structure which has no sharp corner and will not have a sharp tip which may cause injury to the human body, and the operator may hold any portions of the protection housing 3, thereby further improving the security and convenience in holding the drone. The rotary wing 2 is internally mounted in the protection housing 3 and is connected to the drone body 1 through the protection housing 3. Compared with the conventional technology in which the rotary wing 2 is connected above the drone body 1 through a connecting rod, the structure, in which the rotary wing 2 is internally mounted, reduces an overall height of the drone, thereby improving the portability of the drone.

The protection housing 3 may have various structures, as described above, as long as the protection housing 3 can satisfy the installation requirement of the rotary wing 2 and has a certain hollow rate. For example, the protection housing 3 may be configured as a quadrate hollow housing, or to have other forms such as circular shape, triangular shape, trapezoid and the like.

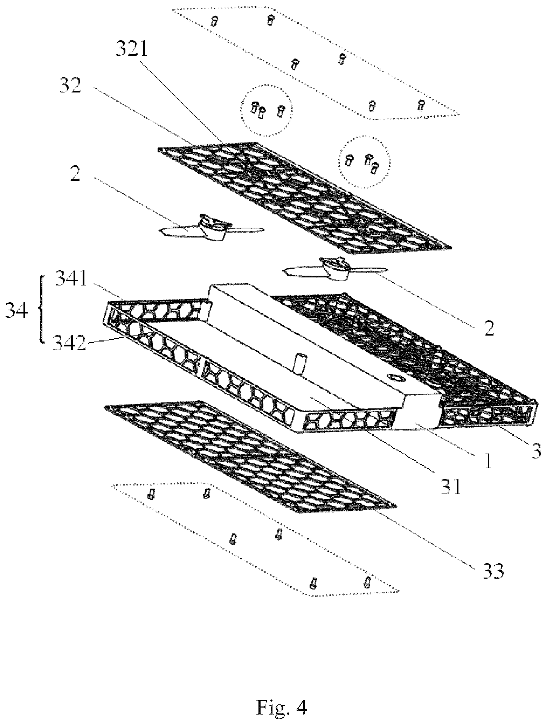

As shown in Figure 4, in the fully protected drone according to the present application, the protection housing 3 may be configured to have an approximately quadrate structure and may include a middle frame 34, a top plate 32 and a bottom plate 33. The top plate 32 and the bottom plate 33 are respectively connected at a top portion and a bottom portion of the middle frame 34, to close the middle frame 34 from the top and the bottom, thereby forming a U-shaped closed frame with an end open. In this case, the middle space enclosed by the frame constitutes the hollow cavity 31 for installing the rotary wing 2.

In the above structure, the top plate 32 and the bottom plate 33 are equivalent to a top cover and a bottom cover of the middle frame 34, and the middle frame 34 constitutes a body structure of the protection housing 3. In detail, the middle frame 34 may be configured in the form of U shape and specifically in the form of U shape when being viewed from the top. The open end of the U shape directly faces the drone body 1, and the middle frame 34 is connected to the drone body 1 through the open end of the U shape. As shown in Figure 4, two sides of the open end of the U shape correspond to a front end and a rear end of the drone body 1, and the two sides of the open end of the U shape are respectively connected to the front end and the rear end of the drone body 1 by welding, riveting, threaded connection or other manners. The top plate 32 may be mounted at a top surface of the middle frame 34 to cover the top of the middle frame 34, thereby closing the top of the middle frame 34. The bottom plate 33 may be mounted at a bottom surface of the middle frame 34, to block the bottom of the middle frame 34, thereby closing the bottom of the middle frame 34. In this way, a U-shaped frame structure with one open end is eventually formed. This frame structure is the protection housing 3 of the present application, and the middle cavity enclosed by the frame structure is the hollow cavity 31.

In the above protection housing 3, the top plate 32 and the bottom plate 33 may be directly fixedly mounted onto the middle frame 34 and then connected to the drone body 1 through the middle frame 34. The top plate 32 and the bottom plate 33 may be connected to the middle frame 34 in a detachable manner, such as threaded connection and the like, and may also be fixedly connected to the middle frame 34 in a fixed manner, such as welding and the like. The top plate 32 and the bottom plate 33 may also be directly connected to the drone body 1 rather than via the middle frame 34. In the embodiment shown in Figure 4, by taking the protection housing 3 at the left side of the drone body 1 as an example, the middle frame 34 of the protection housing 3 is connected, through its open end, to a left side surface of the drone body 1 and thus the open end of the middle frame 34 is closed by the left side surface of the drone body 1, to form a circumferentially closed structure. In this case, a connecting hole location can be provided at the left side surface of the drone body 1, for example, the connecting hole location is provided at the middle of the left side surface or in each of a front end and a rear end of the left side surface, thus each of the top plate 32 and the bottom plate 33 can be connected to the drone body 1 through a respective end next to the drone body 1. Of cause, positioning of the top plate 32 and the bottom frame 33 can also be achieved by providing the connecting hole location at the connection portion between the drone body 1 and the middle frame 34, and specifically, the connecting hole location may be provided at the open end of the middle frame 34 or at each of the front end and the rear end of the drone body 1. The connecting hole location may also be provided at a side surface of the middle frame 34 which is parallel to the left side surface of the drone body 1, to position another ends (i.e. the ends away from the drone body 1) of the top plate 32 and the bottom plate 33.

Specifically, the rotary wing 2 may be mounted on the top plate 32 or the bottom plate 33, and in an arrangement manner, the rotary wing 2 may be mounted on the top plate 32. As shown in Figures 2 to 4, several mounting portions 321 may be provided on the top plate 32, and the mounting potions 321 correspond to the rotary wings 2, and thus each of the rotary wings 2 may be mounted on the respective mounting portion 321. In the case that the rotary wing 2 is mounted on the top plate 32, in one aspect, a part of the space in the hollow cavity 31 below the rotary wing 2 can provide a space to allow the rotary wing 2 to rotate, thereby reducing air resistance to the rotary wing 2, and allowing the rotary wing 2 to generate enough lift force; and in another aspect, during flying and retrieving the drone by hand, the operator is used to hold the lower part of the drone, thus in the case that the rotary wing 2 is mounted on the top plate 32, the contact between the rotary wing 2 and the human body can be effectively avoided, thereby ensuring an effective protection of the human body.

In the embodiment shown in Figures 2 to 4, a triangular connecting element may be arranged on the top of the rotary wing 2. The mounting portion 321 may be arranged at a position corresponding to the top plate 32, and may be specifically embodied as mounting holes corresponding to three corners of the connecting element, and then the connecting element is connected to the mounting portion 321 by a connector, such as a bolt, a pin or the like.

The mounting portions 321 may be arranged according to the number of the rotary wings 2 and the distribution of the rotary wings 2. For example, by taking an extending direction of the drone body 1 as the front and rear direction, several of the mounting portions 321 may be arranged at intervals on the top plate 32 from front to rear. Since the middle frame 34 is connected to the drone body 1 through its open end, the arrangement of the mounting portions 321 at intervals from front to rear is the arrangement of the mounting portions 321 at intervals in a direction from one side to another side of the middle frame 34. The intervals between the individual mounting portions 321 may be equal or different. The position of individual mounting portion 321 can be adjusted by those skilled in the art according to the installation requirement of the rotary wings 2.

As described above, the connection between the middle frame 34 and the drone body 1, the connection between the top plate 32 and the middle frame 34, and the connection between the bottom plate 33 and the middle frame 34 may each be achieved in a detachable manner. The detachable connection refers to the connection that can be detached as required without damaging the connector, such as threaded connection, pin connection and the like.

In addition, in the present application, each of the top plate 32, the bottom plate 33 and the middle frame 34 may be configured as an integrated structure or may be configured as a separated structure that can be spliced together. In detail, the top plate 32 may include several first sub-plates, and the first sub-plates may be spliced to form a plate-like integrated part that can match with the drone body 1 and the middle frame 34. Similarly, the bottom plate 33 may also include several first sub-plates, and the several first sub-plates are spliced to form an integrated plate-like structure and may be specifically arranged with reference to the top plate 32.

The middle frame 34 may include two side plates 341 and an end plate 342 connected at tail ends of the two side plates 341. Ahead end of each of the side plates 341 is connected to the drone body 1, and the tail end of the side plate 341 refers to an end opposite to the head end. Meanwhile, each of the side plates 341 may include second sub-plates configured to be spliced together, the end plate 342 may also include second sub-plates configured to be spliced together, and the second sub-plates can be spliced as required to form a desired structure of the middle frame 34.

With the above structural form that can be spliced, the protection housing 3 according to the present application can be adjusted as required, for example by adjusting the length and width of the top plate 32, the length and width of the bottom plate 33, the length, width and height of the middle frame 34, the structural form of the top plate 32, the bottom plate 33 and the middle frame 34 and the like. In this way, the protection housing 3 can match with the drone body 1, to mount four rotary wings 2 or other numbers of rotary wings 2, thereby effectively extending the application range of the protection housing 3 and improving the convenience in assembling and disassembling the protection housing 3.

The top plate 32, the bottom plate 33 and the middle frame 34 may also be configured as a foldable structure or other portable structures as desired.

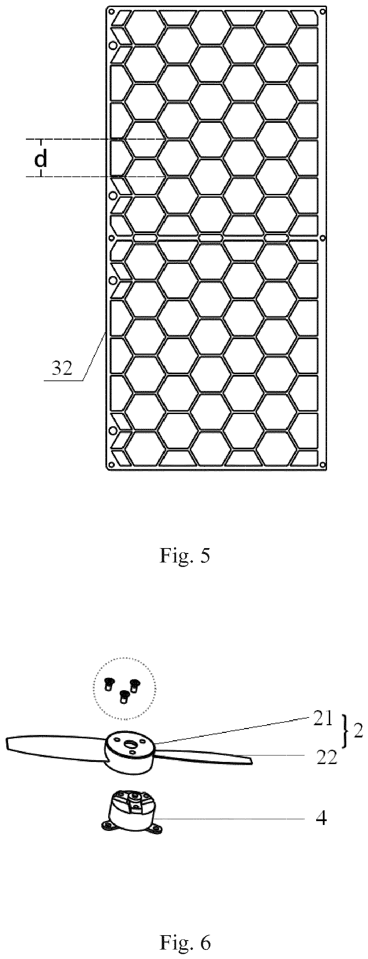

On this basis, reference is further made to Figure 5. In the present application, the protection housing 3 may have a non-hollow rate of 10% to 20%. The hollow rate refers to the percentage of a hollow area in an overall area of the protection housing 3. After a series of tests of the relationship between the hollow area and the power loss of the rotary wing 2, the following data are obtained: in the case that the non-hollow rate is 10%, the power loss of the rotary wing 2 is 6%; in the case that the non-hollow rate is 15%, the power loss of the rotary wing 2 is 11%; and in the case that the hollow rate is 80%, the power loss of the rotary wing 2 is 18%. Hence, in the embodiments of the present application, the hollow rate is limited in the above range in the case that an overall weight of the drone, a structure stability required for fixing the motor 4 to the meshed structure, a structure ruggedness required for hand-holding the drone, and an overall flight efficiency are all considered.

In more detail, the meshed structure of the protection housing 3 may be a regular hexagonal grid pattern mesh, as shown in Figure 5. In this case, the radius of a circumscribed circle of the regular hexagon is controlled between 6mm to 8mm, to meet the hollow rate. As shown in Figure 5, the regular hexagons may be arranged sequentially in the front and rear direction, and in this case, centers of the regular hexagons are on the same extending line in the front and rear direction, and a distance between each adjacent regular hexagons may be defined as d. In view of the above considerations, d can be defined as 12mm, and correspondingly, in this case, the non-hollow rate is 15%, which provides a great usability.

Moreover, in the present application, the meshed structure may be made of a carbon fiber plate, that is, the protection housing 3 may be made of a carbon fiber plate. In this case, the drone has a light weight, and thus can better meet the flight requirement in the case that the rotary wing 2 has a certain power loss.

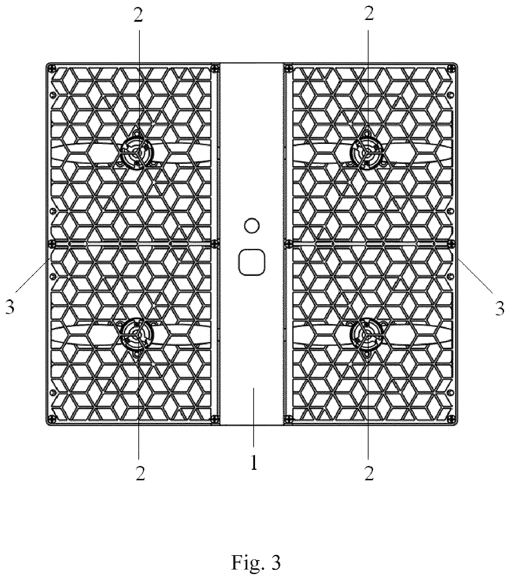

For the drone of the present application, two sides of the drone body 1 may be each provided with the protection housing 3, and the protection housings 3 at the two sides of the drone body 1 may be symmetrically arranged in the left and right direction with respect to the drone body 1, such as the drone with four rotary wings 2 as shown in Figures 2 to 4. Furthermore, top surfaces of the two protection housings 3 at the two sides are flush with the top surface of the drone body 1, that is, the top surfaces of the two protection housings 3 and the top surface of the drone body 1 are located in the same plane. The bottom surfaces of the two protection housings 3 are flush with the bottom surface of the drone body 1, that is, the bottom surfaces of the two protection housings 3 and the bottom surface of the drone body 1 are located in the same plane. In this case, the whole drone is of a cuboid integral structure as shown in Figures 2 and 3. This cuboid drone has a small thickness and easy to carry. More importantly, this structure allows the drone to subject to a small air resistance during flight, and thus the drone has a better flight ability.

Reference is further made to Figure 6, in the drone of the present application, the rotary wing 2 may further include a rotary wing body 21 and several wing portions 22. Each of the wing portions 22 extends out from the rotary wing body 21. The rotary wing 2 shown in Figure 6 has two wing portions 22. Meanwhile, the rotary wing body 21 may be in the form of a hollow casing, thus the motor 4 can be nested in the rotary wing body 21 and the rotary wing 2 and the motor 4 may form a nested structure. In this way, in one aspect, the space occupied by the motor 4 is saved to reduce the overall height of the drone; and in another aspect, the motor 4 and the rotary wing 2 form a nested integrated structure, thus it is not necessary to separately mount the motor 4, which improves the convenience in assembling and disassembling and eventually allows the drone according to the present application to have an ultra-thin structure.

As shown in Figure 6, for mount the motor 4, the motor 4 may be fixed at a top surface of the rotary wing body 21 by a connector such as a bolt or the like, or, the motor 4 may be hung in the rotary wing body 21. Other fixed connection manners may also be utilized to mount the motor 4, such as snap fitting or the like.

It should be noted that, the term "several" used herein refers to that the number is undetermined, and may be two or more than three, or may be one, and can be set as desired; terms such as "first", "second" and the like used herein are merely intended to distinguish different components with the same or similar structures from each other, rather than define a particular order.

The fully protected drone according to the present application is described in detail hereinbefore. The principle and the embodiments of the present application are illustrated herein by specific examples. The above description of examples is only intended to help the understanding of the core concept of the present application, the scope of protection being limited by the claims.

## Claims

1. A fully protected drone, comprising a drone body (1) and a rotary wing (2) connected to the drone body (1), wherein the fully protected drone further comprises a protection housing (3) connected to the drone body (1), the protection housing (3) is a meshed closed housing and has a hollow cavity (31), and the rotary wing (2) is mounted in the hollow cavity (31), **characterized in that** the protection housing (3) comprises a top plate (32), a bottom plate (33) and a middle frame (34), the middle frame (34) is configured to have a U shape, when being viewed from the top, and is connected to the drone body (1) through an open end of the U shape; and the top plate (32) and the bottom plate (33) are respectively mounted on a top surface and a bottom surface of the middle frame (34), to enclose the middle frame (34) to form the hollow cavity (31).

2. The fully protected drone according to claim 1, wherein several mounting portions (321) for mounting the rotary wing (2) are provided on the top plate (32).

3. The fully protected drone according to claim 2, wherein the mounting portions (321) are arranged at intervals from one side to another side of the middle frame (34).

4. The fully protected drone according to claim 1, wherein the middle frame (34) is detachably connected to the drone body (1); and the top plate (32) and/or the bottom plate (33) is detachably connected to the middle frame (34).

5. The fully protected drone according to claim 1, wherein the top plate (32) and/or the bottom plate (33) comprises a plurality of first sub-plates spliced together; and the middle frame (34) comprises two side plates (341) and an end plate (342) connected between tail ends of the two side plates (341), and the side plate (341) and/or each of the end plates (342) comprises a plurality of second sub-plates spliced together.

6. The fully protected drone according to any one of claims 1 to 5, wherein the rotary wing (2) comprises a rotary wing body (21) and a wing portion (22) extending out from the rotary wing body (21), the rotary wing body (21) is in the form of a hollow housing, and a motor (4) is nested in the hollow housing.

7. The fully protected drone according to claim 6, wherein the protection housing (3) has a non-hollow rate ranging from 10% to 20%.

8. The fully protected drone according to claim 7, wherein the meshed structure of the protection housing (3) is in the form of a regular hexagon, and a radius of a circumscribed circle of the regular hexagon ranges from 6mm to 8mm.

9. The fully protected drone according to claim 6, wherein the protection housings (3) are symmetrically arranged at two sides of the drone body (1), top surfaces of the protection housings (3) at the two sides are joined with a top surface of the drone body (1) to be flush with the top surface of the drone body (1), and bottom surfaces of the protection housings (3) at the two sides are joined with a bottom surface of the drone body (1) to be flush with the bottom surface of the drone body (1), to form a cuboid drone.

## Patentansprüche

1. Vollständig geschützte Drohne, umfassend einen Drohnenkörper (1) und einen mit dem Drohnenkörper (1) verbundenen Drehflügel (2), wobei die vollständig geschützte Drohne ferner ein mit dem Drohnenkörper (1) verbundenes Schutzgehäuse (3) umfasst, wobei das Schutzgehäuse (3) ein geschlossenes Maschengewebegehäuse ist und einen Hohlraum (31) aufweist, und der Drehflügel (2) in den Hohlraum (31) eingebaut ist, **dadurch gekennzeichnet, dass** das Schutzgehäuse (3) eine Oberplatte (32), eine Unterplatte (33) und einen Mittelrahmen (34) umfasst, wobei der Mittelrahmen (34) von oben betrachtet U-förmig ausgebildet ist und durch das offene Ende der U-Form mit dem Drohnenkörper (1) verbunden ist; und die Oberplatte (32) und die Unterplatte (33) jeweils auf einer Oberseite und einer Unterseite des Mittelrahmens (34) angebracht sind und den Mittelrahmen (34) unter Bildung des Hohlraums (31) umschließen.

2. Vollständig geschützte Drohne nach Anspruch 1, wobei auf der Oberplatte (32) mehrere Befestigungsabschnitte (321) zur Befestigung des Drehflügels (2) vorgesehen sind.

3. Vollständig geschützte Drohne nach Anspruch 2, wobei die Befestigungsabschnitte (321) von einer Seite zur anderen Seite des Mittelrahmens (34) in Abständen angeordnet sind.

4. Vollständig geschützte Drohne nach Anspruch 1, wobei der Mittelrahmen (34) lösbar mit dem Drohnenkörper (1) verbunden ist; und die Oberplatte (32) und/oder die Unterplatte (33) lösbar mit dem Mittelrahmen (34) verbunden ist.

5. Vollständig geschützte Drohne nach Anspruch 1, wobei die Oberplatte (32) und/oder die Unterplatte (33) eine Vielzahl von ersten zusammengefügten Teilplatten umfasst; und der Mittelrahmen (34) zwei Seitenplatten (341) und eine zwischen den hinteren Enden der beiden Seitenplatten (341) eingefügte Endplatte (342) umfasst, und die Seitenplatte (341) und/oder jede der Endplatten (342) eine Vielzahl von zweiten zusammengefügten Teilplatten umfasst.

6. Vollständig geschützte Drohne nach einem der Ansprüche 1 bis 5, wobei der Drehflügel (2) einen Drehflügelkörper (21) und einen sich aus dem Drehflügelkörper (21) heraus erstreckenden Flügelabschnitt (22) umfasst, der Drehflügelkörper (21) die Form eines hohlen Gehäuses aufweist und im hohlen Gehäuse ein Motor (4) eingebettet ist.

7. Vollständig geschützte Drohne nach Anspruch 6, wobei das Schutzgehäuse (3) einen nicht-hohlen Anteil im Bereich von 10 % bis 20 % aufweist.

8. Vollständig geschützte Drohne nach Anspruch 7, wobei die Maschenstruktur des Schutzgehäuses (3) die Form eines regelmäßigen Sechsecks hat und der Radius eines von einem regelmäßigen Sechseck umgrenzten Kreises im Bereich von 6 mm bis 8 mm liegt.

9. Vollständig geschützte Drohne nach Anspruch 6, wobei die Schutzgehäuse (3) symmetrisch an zwei Seiten des Drohnenkörpers (1) angeordnet sind, wobei die Oberseiten der Schutzgehäuse (3) an beiden Seiten bündig mit der Oberseite des Drohnenkörpers (1) verbunden sind, und die Unterseiten der Schutzgehäuse (3) an beiden Seiten bündig mit der Unterseite des Drohnenkörpers (1) verbunden sind, wodurch eine quaderförmige Drohne gebildet wird.

## Revendications

1. Drone entièrement protégé, comprenant un corps de drone (1) et une aile rotative (2) reliée au corps de drone (1), dans lequel le drone entièrement protégé comprend en outre un logement de protection (3) relié au corps de drone (1), le logement de protection (3) est un logement fermé maillé et présente une cavité creuse (31), et l'aile rotative (2) est montée dans la cavité creuse (31), **caractérisé en ce que** le logement de protection (3) comprend une plaque supérieure (32), une plaque inférieure (33) et un cadre central (34), le cadre central (34) est configuré pour avoir une forme en U, lorsqu'il est vu du dessus, et est relié au corps du drone (1) par une extrémité ouverte de la forme en U ; et la plaque supérieure (32) et la plaque inférieure (33) sont respectivement montées sur une surface supérieure et une surface inférieure du cadre central (34), pour enfermer le cadre central (34) afin de former la cavité creuse (31).

2. Drone entièrement protégé selon la revendication 1, dans lequel plusieurs parties de montage (321) pour le montage de l'aile rotative (2) sont prévues sur la plaque supérieure (32).

3. Drone entièrement protégé selon la revendication 2, dans lequel les parties de montage (321) sont disposées à intervalles d'un côté à l'autre côté du cadre central (34).

4. Drone entièrement protégé selon la revendication 1, dans lequel le cadre central (34) est relié de manière amovible au corps du drone (1) ; et la plaque supérieure (32) et/ou la plaque inférieure (33) sont reliées de manière amovible au cadre central (34).

5. Drone entièrement protégé selon la revendication 1, dans lequel la plaque supérieure (32) et/ou la plaque inférieure (33) comprennent une pluralité de premières sous-plaques reliées ensemble ; et le cadre central (34) comprend deux plaques latérales (341) et une plaque d'extrémité (342) reliée entre les extrémités arrière des deux plaques latérales (341), et la plaque latérale (341) et/ou chacune des plaques d'extrémité (342) comprennent une pluralité de secondes sous-plaques reliées ensemble.

6. Drone entièrement protégé selon l'une quelconque des revendications 1 à 5, dans lequel l'aile rotative (2) comprend un corps d'aile rotative (21) et une partie d'aile (22) s'étendant vers l'extérieur à partir du corps d'aile rotative (21), le corps d'aile rotative (21) est sous forme d'un logement creux, et un moteur (4) est emboîté dans le logement creux.

7. Drone entièrement protégé selon la revendication 6, dans lequel le logement de protection (3) a un taux non creux allant de 10 à 20 %.

8. Drone entièrement protégé selon la revendication 7, dans lequel la structure maillée du logement de protection (3) est sous forme d'un hexagone régulier, et le rayon d'un cercle circonscrit de l'hexagone régulier est compris entre 6 mm et 8 mm.

9. Drone entièrement protégé selon la revendication 6, dans lequel les logements de protection (3) sont disposés symétriquement sur deux côtés du corps du drone (1), les surfaces supérieures des logements de protection (3) sur les deux côtés sont reliées à une surface supérieure du corps du drone (1) pour être alignées avec la surface supérieure du corps du drone (1), et les surfaces inférieures des logements de protection (3) sur les deux côtés sont reliées à une surface inférieure du corps du drone (1) pour être alignées avec la surface inférieure du corps du drone (1), pour former un drone parallélépipédique.
